# EUROPEAN PATENT SPECIFICATION

(11) **EP 4 578 548 B1**
(45) Date of publication and mention of the grant of the patent: **29.04.2026**
(21) Application number: 23220391.9
(22) Date of filing: 27.12.2023
(51) Int. Cl.: B01L 3/00, G01N 35/10, B01L 3/02

(54) **UNIAXIAL COUPLING DEVICE**
EINACHSIGE KOPPLUNGSVORRICHTUNG
DISPOSITIF DE COUPLAGE UNIAXIAL

(43) Date of publication of application: 02.07.2025
(73) Proprietor: TECAN Trading AG, 8708 Männedorf (CH)
(72) Inventor: HAPPEL, Jonathan, 8706 Meilen (CH)
(74) Representative: Troesch Scheidegger Werner AG

(56) References cited:
- US-A1- 2003 027 345

## Description

### TECHNICAL FIELD OF THE INVENTION

The current invention relates to a uniaxial coupling arrangement with a uniaxial coupling device and an attachment to be coupled therewith ,a uniaxial coupling apparatus with said uniaxial coupling arrangement and a method for coupling the attachment with said uniaxial coupling device.

### DESCRIPTION OF THE RELATED ART

Known embodiments of such uniaxial coupling devices comprise mechanical coupling elements with actuators to realize or release a form-fit connection. Such devices are expensive to manufacture and maintain, they take up more space due to the required actuators and they require more programming.

US 2003/027345 describes an example of a coupling device of the prior art.

### SUMMARY OF THE INVENTION

It is a task of current invention to provide a uniaxial coupling arrangement that does not require actuators for coupling or uncoupling.

This task is solved by a uniaxial coupling arrangement with the features of claim 1. Further embodiments of the uniaxial coupling arrangement, a uniaxial coupling apparatus, as well as a method for coupling an

attachment and a head of a uniaxial coupling device are defined by the features of further claims.

A uniaxial coupling device according to the invention comprises a head and a holder that are movable relative to each other in a single direction, and at least one first abutment and at least one second abutment that are stationary with respect to the holder. Usually, said single direction is a vertical direction. However, said single direction could also be a horizontal direction or a direction at an angle greater zero with respect to the vertical direction or the horizontal direction. The holder is aligned with the head in said single direction. The head comprises at least one connector that is displaceable in said single direction between a first position and a second position, wherein with respect to the head, the first position is closer to the holder than the second position. Usually, there are two connectors, only one or three or four connectors are also possible. The at least one connector comprises at least one first coupling surface on a side facing the holder. The holder comprises at least one reception for receiving an attachment to be coupled to the head. The at least one reception is displaceable in said single direction between a first position and a second position, wherein with respect to the holder, the first position is closer to the head than the second position. The distance between the first position of the at least one connector and the second position of the at least one connector corresponds to the distance between the first position of the reception and the second position of the reception. The at least one connector is aligned with the at least one first abutment in said single direction. The at least one first abutment is arranged on a side of the holder facing the head. The at least one second abutment is arranged on a side of the connector facing away from the holder and is aligned with the at least one connector in said single direction. When an attachment is arranged on the reception, the at least one first coupling surface abuts a corresponding at least one second coupling surface of the attachment, while the at least one connector abuts the at least one first abutment, when the at least one connector is in its first position and when the reception is in its first position, and the at least one first coupling surface is spaced apart from the corresponding at least one second coupling surface of the attachment while the at least one connector abuts the at least one first abutment, when the at least one connector is in its second position and when the reception is in its second position. One of the at least one first coupling surface and the at least one second coupling surface belongs to a magnetic element and the other belongs to a magnetizable element or both belong to a magnetic element.

Such a uniaxial coupling device has the advantage that there is no actuator needed for coupling or uncoupling an attachment to the head. The absence of an actuator enables a compact design.

In one embodiment, the at least one first coupling surface belongs to a magnetizable element and the at least one second coupling surface belongs to a magnetic element. Alternatively, the at least one first coupling surface belongs to a magnetic element and the at least one second coupling surface belongs to a magnetizable element.

In one embodiment, the at least one first coupling surface and the at least one second coupling surface are essentially perpendicular to said single direction.

In one embodiment, the at least one connector comprises at least one elevation extending towards the holder in said single direction, and wherein the first coupling surface is a face of said at least one elevation.

In one embodiment, the at least one connector comprises two, three, four or more elevations and an equal number of first coupling surfaces.

In one embodiment, the head comprises a plate that extends essentially perpendicular to said single direction. Usually, the plate extends in horizontal directions. On the plate, the at least one connector is displaceable mounted with a connector rail extending in said single direction. The connector rail is mounted displaceable to the plate by means of at least one connector guide. For example, the at least one connector guide is a bush bearing.

In one embodiment, there are two connector guides at each connector, wherein in said single direction, one connector guide is arranged on one side of the connector and one connector guide is arranged on a side opposite thereto.

In one embodiment, the connector rail protrudes above the at least one first coupling surface in the direction of the holder.

In one embodiment, the connector rail comprises a straight bar with a circular cross-section. Straight bars with other cross-section shapes are also possible. For example, straight bars with polygonal cross-sections, such as tringle, square, rectangle, pentagon, or hexagon. Polygonal cross-sections prevent unintentional rotation around the longitudinal axis of the bars.

In one embodiment, the head comprises at least one detent element with which the connector is detachably lockable in its first position and its second position. For example, detent elements, such as ball flycatchers or detent pins can be used.

In one embodiment, the at least one detent element is arranged on the plate and a corresponding snap-in recess is arranged on the at least one connector. Alternatively, the at least one detent element is arranged on the at least one connector and the corresponding snap-in recess is arranged on the at least one connector.

In one embodiment, the at least one connector is arranged in a laterally peripheral region of the head. Usually, on a lateral horizontal side of the head.

In one embodiment, one connector is arranged on one lateral side of the head and one connector is arranged on a lateral opposite side thereof.

In one embodiment, the holder comprises a housing with at least one blind hole whose longitudinal axis is parallel to said single direction. The reception comprises at least one pin that is arranged in the at least one blind hole and that is pushed from its second position towards its first position by a resilient element. The resilient element can be a compression spring. For example, the at least one pin comprises a circular cross-section.

In one embodiment, there are two, three, four or more blind holes and accordingly two, three, four or more pins.

In one embodiment, the housing comprises at least one recess facing the head and respective side walls surrounding the at least one recess, and the at least one blind hole is arranged in one of the side walls, its opening facing the head. Usually, there are four blind holes, wherein one blind hole is in each corner region of the side walls.

In one embodiment, the first abutment is arranged on the holder. The at least one first abutment can be arranged at one of the side walls of the holder. For example, the at least one first abutment is arranged in the middle of two neighbouring pins. In the case of two first abutments, one first abutment is arranged on one side of the holder in a first horizontal direction and one first abutment is arranged on a side of the holder opposite thereof.

In one embodiment, the at least one first abutment comprises a straight bar with a circular cross-section.

In one embodiment, the at least one first abutment protrudes above the at least one reception in its first position in the direction of the head.

The features of the above-mentioned embodiments of the uniaxial coupling device can be used in any combination, unless they contradict each other.

A Uniaxial coupling apparatus according to the invention comprising a uniaxial coupling device according to one of before-mentioned embodiments, a base plate with a first lift for achieving the relative movement between the head and the holder in a vertical direction. The base plate extends in a first horizontal direction that is perpendicular to the vertical direction and in a second horizontal direction that is perpendicular to the first horizontal direction and the vertical direction. The first lift comprises a first platform that is moveable with a first drive and wherein the first platform is guided by at least one lift rail that is mounted on one lateral side of the base plate in the first horizontal direction. The relative movement between the head and the holder can be achieved with a head that is movable with the first lift or with a holder that is movable with the first lift.

In one embodiment, at least one lift rail is arranged on one lateral side of the base plate and at least one lift rail is arranged on a lateral opposite side thereof. In the case of four lift rails, two lift rails are arranged on one lateral side of the base plate and wherein two lift rails are arranged on the lateral opposite side thereof.

In one embodiment, the first lift comprises at least one first spindle that is arranged on one lateral side of the base plate and that is operatively connected to the first drive. If there are two first spindles, one first spindle is arranged on one lateral side of the base plate and one first spindle is arranged on a lateral opposite side thereof.

In one embodiment, a first belt operatively connects all first spindles to the first drive.

The lateral sides of the lift rails and the lateral sides of the first spindles can be oriented in the first horizontal direction.

In one embodiment, a shuttle with a carrier is provided on the base plate, wherein the carrier is movable in a direction perpendicular to said single direction, from a first station between the base plate and the first platform to a second station in an area outside of a projection of the first platform in said single direction.

In one embodiment, the shuttle comprises a carrier) that is movable with a shuttle drive and that is guided by at least one shuttle rail. If there are two shuttle rails, one shuttle rail is provided on one lateral side of the base plate and one shuttle rail is provided on one lateral opposite side thereof. The at least one shuttle rail can be formed integrally in a single piece with the base plate.

In one embodiment, a shuttle belt operatively connects the carrier to the shuttle drive.

The carrier is movable in the second horizontal direction.

In one embodiment, the first platform comprises a first part and a second part that are arranged next to each other in the second horizontal direction, wherein the first part or the second part of the first platform comprises a reception for the head. The first part of the first platform can be further away from the second station of the carrier of the shuttle.

In one embodiment, the first part of the first platform comprises a reception for the head.

In one embodiment, the first part of the first platform comprises a first gas connection and wherein the second part of the first platform comprises a second gas connection. The first gas connection and the second gas connection can be connected to the same gas tank or to different gas tanks with different gases. For example, one gas can be dry nitrogen, and the other gas can be dry air. At least one of the gases can be warm, and can have a temperature in the range of 10°C to 90°C, preferably 20°C to 80°C.

In one embodiment, the uniaxial coupling apparatus further comprising a second lift that comprises at least one second platform that is moveable with a second drive and wherein the at least one second platform is guided by the same at least one lift rail as the first platform of the first lift.

In one embodiment, the second lift is arranged between the second part of the first platform and the base plate. If there are two second platforms, one second platform is arranged on one lateral side of the base plate and one second platform is arranged on the lateral opposite side thereof.

In one embodiment, the second lift comprises at least one second spindle that is arranged on one lateral side of the base plate, next to the at least one first spindle and wherein the at least one second spindle is operatively connected to the second drive. In the case of two second spindles, one second spindle is arranged on one lateral side of the base plate and one second spindle is arranged on the lateral opposite side thereof.

A second belt can operatively connect all second spindles to the second drive.

In one embodiment, a top plate is provided on a side of the at least one first lift rail opposite to the base plate, wherein the top plate is parallel to the base plate.

In one embodiment, the at least one second abutment is arranged on a side of the top plate facing the base plate or wherein the second abutment is formed integrally in a single piece with the top plate on a side facing the base plate.

In one embodiment, the uniaxial coupling apparatus further comprising a housing that encloses at least the base plate and the top plate, wherein an opening is provided on one side of the housing allowing the movement of the shuttle through said opening from the first station inside the housing to the second station outside of the housing. A window can be provided in a lateral side of the housing. A suction connection can be provided at the housing. At the suction connection, a negative pressure can be applied for removing steam and/or gas from the inside of the housing.

In one embodiment, the uniaxial coupling apparatus further comprising a transfer unit with a motor driven X-axis and/or a motor driven Y-axis and a motor driven Z-axis that allows an alignment of a transfer unit head with the second station of the shuttle in said single direction. The transfer unit can be a pipetting robot with a pipetting head.

In one embodiment, the uniaxial coupling apparatus further comprising a machine base, wherein the base plate is arranged on the machine base or wherein the base plate and the transfer unit are arranged on the machine base.

A Uniaxial coupling arrangement comprising a uniaxial coupling device according to one of the previously mentioned embodiments of the uniaxial coupling device or the uniaxial coupling apparatus and an attachment that is arranged between the head and the holder.

In one embodiment, the number of second coupling surfaces is identical to the number of first coupling surfaces and wherein the lateral positions of the second coupling surfaces are identical to the lateral positions of the corresponding first surfaces.

In one embodiment, the attachment comprises a plate-shaped body with a surface facing the head that is complementary to a corresponding surface of the head facing the attachment. The at least one second coupling surface can be arranged in a laterally peripheral region of the attachment. In the case of two or more second coupling surfaces, at least one second coupling surface is arranged on one lateral side of the attachment and at least one second coupling surface is arranged on a lateral opposite side thereof.

In one embodiment, at least one through hole for the at least one first abutment is arranged in the laterally peripheral region of the attachment. The at least one through hole can be arranged in the middle of two neighbouring second coupling surfaces. If there are two through holes, one through hole is arranged on one lateral side of the attachment and one through hole is arranged on a lateral opposite side thereof.

In one embodiment, the attachment comprises a closed circumferential frame that comprises the laterally peripheral region. The at least one second coupling surface can be flush with its surrounding surface.

A Method for coupling and uncoupling an attachment and the head of the uniaxial coupling device according to one of the afore-mentioned embodiments or of the uniaxial coupling apparatus according to one of the afore-mentioned embodiments comprises the steps of:
- Providing the uniaxial coupling device according to one of the afore-mentioned embodiments with the connector being in its first position and with the reception being in its first position;
- Placing an attachment on the reception of the holder;
- Decreasing the distance between the head and the attachment until the at least one first coupling surface of the at least one connector abuts the at least one second coupling surface of the attachment, thereby coupling the head to the attachment;
- Increasing the distance between the head and the holder, thereby separating the attachment from the holder;
- Decreasing the distance between the head and the holder until the at least one first coupling surface of the at least one connector abuts the at least one second coupling surface of the attachment, while the at least one connector is in its second position and while the reception is in its second position, thereby separating the head from attachment;
- Increasing the distance between the head and the holder.

### BRIEF DESCRIPTION OF THE DRAWINGS

Embodiments of the current invention are described in more detail in the following with reference to the figures. These are for illustrative purposes only and are not to be construed as limiting. It shows
Fig. 1 a sectional view through a uniaxial coupling device according to the invention;
Fig. 2 a perspective top view of the head of the uniaxial coupling device of figure 1;
Fig. 3 a perspective bottom view of the head of the uniaxial coupling device of figure 2;
Fig. 4 a perspective top view of the holder and a 4x6 array attachment;
Fig. 5 a perspective partial sectional view of the holder of figure 4 with a 8x12 array attachment;
Figs. 6A-F the steps for coupling and uncoupling the attachment and the head of figure 1;
Fig. 7 a perspective view of a basic uniaxial coupling apparatus according to the invention; and
Fig. 8 a side view of an extended uniaxial coupling apparatus according to the invention.

### DETAILED DESCRIPTION OF THE INVENTION

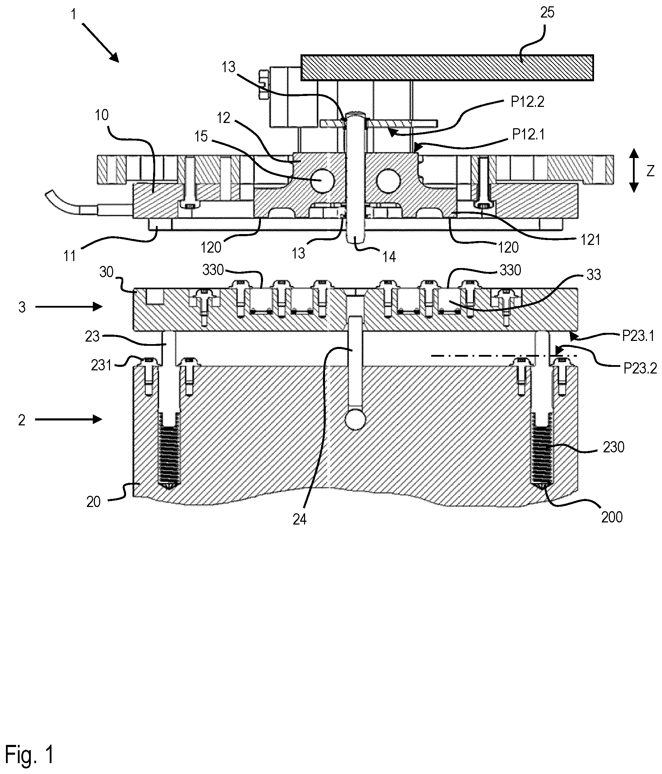

Figure 1 shows a sectional view through a uniaxial coupling device according to the invention. It comprises a head 1 and a holder 2 that are movable relative to each other in a single direction Z, and at least one first abutment 24 that is stationary with respect to the holder 2. The head 1 comprises a plate 10 that extends perpendicular to the single direction, i.e., in the vertical direction Z. On the side facing the holder 2, the plate 10 comprises a closed circumferential collar 11 for receiving an attachment 3 with a plate-shaped body 30 that extends perpendicular to the vertical direction Z and that has a recess that is complementary to the collar 11. The head 1 comprises two connectors 12 that are displaceable in said vertical direction Z between a first position P12.1 and a second position P12.2, wherein with respect to the head 1, the first position P12.1 is closer to the holder 2 than the second position P12.2. The connectors 12 are beam-shaped and comprise four first coupling surfaces 120 on a side facing the holder 2. The first coupling surfaces 120 are distributed over the length of the connectors 12 and are arranged on elevations 121 that extend in said vertical direction Z towards the holder 2. One connector rail 14 is fixed to a central part of each connector 12. The connector rail 14 is pin-shaped an extends in said vertical direction Z over the connector 12 on a side of the first coupling surfaces 120 and on a side opposite thereof. Each connector rail 14 is slidably mounted to the plate 10 by means of connector guides 13. Each connector 12 comprises detent elements 15 with which, the connectors 12 can be releasably clamped in the first position P12.1 and in the second position P12.2. The holder 2 is aligned with the head 1 in said vertical direction Z. The holder 2 comprises four receptions 23 for an attachment 3 to be coupled to the head 1, said four receptions 23 being displaceable in said vertical direction Z between a first position P23.1 and a second position P23.2, wherein with respect to the holder 2, the first position P23.1 is closer to the head 1 than the second position P23.2. The receptions 23 are pins and are arranged in blind holes 200 in the corners of a frame-shaped housing 20 of the holder 2 together with compression springs 230. The pins 23 are prevented from escaping the blind holes 200 by retainers 231. The distance between the first position P12.1 of the connectors 12 and their second positions P12.2 corresponds to the distance between the first position P23.1 of the receptions 23 and their second position P23.2. Each of the two connectors 12 is aligned with one corresponding first abutment 24 in said vertical direction Z. The first abutments 24 are arranged on a side of the holder 2 facing the head 1. The first abutments 24 are pins that are arranged in the middle between two neighbouring first receptions 23. When an attachment 3 is arranged on the reception 23, the first coupling surfaces 120 of the connectors 12 abut corresponding second coupling surfaces 330 of the attachment 3, while the connectors 12 abut the first abutments 24, when the connectors 12 are in their first positions P12.1 and when the receptions 23 are in their first positions P23.1, and the first coupling surfaces 120 are spaced apart from the second coupling surfaces 330 while the connectors 12 abut the first abutments 24, when the connectors 12 are in their second positions P12.2 and when the receptions 23 are in their second positions P23.2. The connectors 12 are made from a magnetizable material and the second coupling surfaces 330 belong to magnets 33 that are embedded in the body 30 of the attachment 3. A common second abutment 25 is arranged on a side of the connectors 12 facing away from the holder 2. The second abutment 25 is stationary with respect to the holder 2 and is aligned with the connectors 12 in said vertical direction Z.

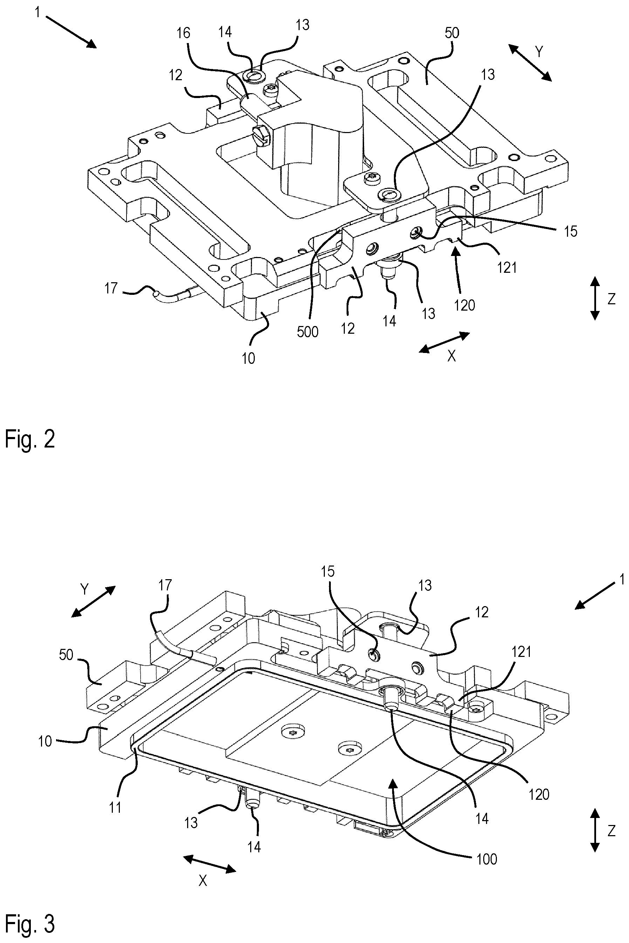

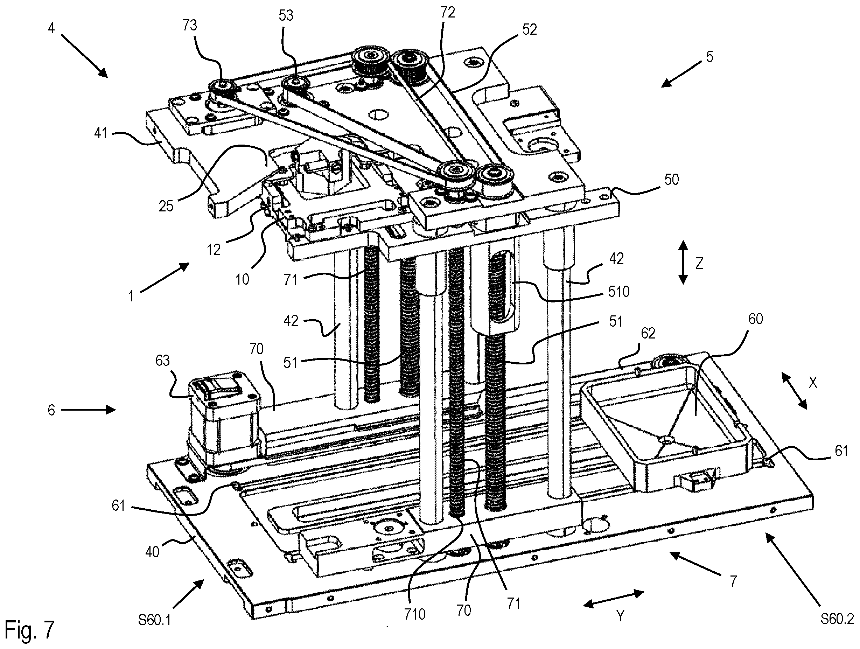

Figure 2 shows a perspective top view of the head 1 of the uniaxial coupling device of figure 1 and figure 3 shows a perspective bottom view of the head 1. In the intended use position, on the upper side of the plate 10, a pressure connection 16 is provided. On the opposite lower side of the plate 10, a recess 100 is provided that is laterally enclosed by the closed circumferential collar 11. A pressure sensor 17 is provided to register the pressure within the recess 100 of the plate 10. The head 1 is fixed to a first platform 50 of a first lift which is shown in figure 7. The connectors 12 are arranged on two opposite lateral sides of the plate 10. Each connector 12 is fixed to a pin-shaped connector rail 14 that is slidable mounted to the plate 10 by means of two bush bearings 13 that are arranged on both free ends of the connector rail 14. To prevent a tilting of the connectors 12 around the vertical axis Z of the connector rail 14, the connectors 12 laterally abut a side of the plate 10. Each connector 12 comprises two resilient thrust pieces or snap shots as detent elements 15 that can releasably engage grooves 500 in a lateral side of the first platform 50 facing the connectors 12.

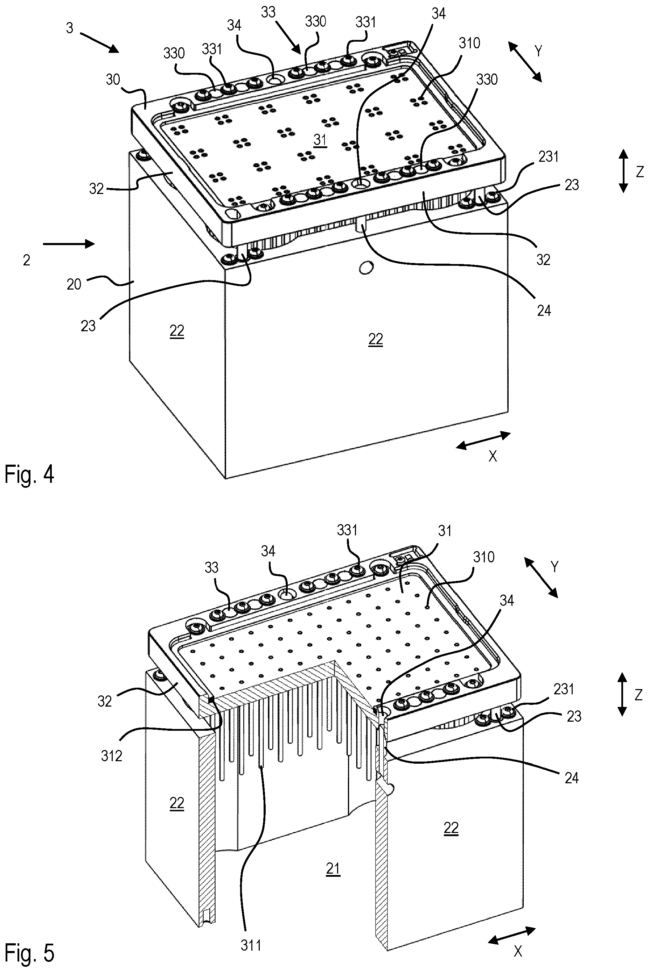

Figure 4 shows a perspective top view of the holder 2 and a 4x6 array attachment and figure 5 shows a perspective partial sectional view of the holder of figure 4 with an 8x12 array attachment. The holder 2 housing 20 with closed circumferential side walls 22 which laterally surround a central recess 21. In each of the corner regions of the housing 20, a spring pin 23 is arranged, wherein the four spring pins 23 together form the reception for the attachment 3. Two retaining screws 231 are arranged on opposite sides of each spring pin 23 preventing it from leaving the blind holes in the side walls 22 of the housing 20. The attachment 3 comprises a plate-shaped body 30 with a closed circumferential frame 32 and a central recess 31 on its top side. In the recess 31 of figure 4, a 4x6 array of four gas channels 310 is provided and in the recess 31 of figure 5, an 8x12 array of individual gas channels 310 is provided. The gas channels extend through the body 30 in the vertical direction Z from the recess 31 to a side opposite thereof. Needles 311 are arranged at each gas channel 310 on the side of the body 30 opposite the recess 31, extending in the recess 21 of the holder 2 when the attachment 3 is placed on the reception pins 23 of the holder 2. Four magnets 33 each are arranged on two opposite side of the frame 32. The magnets 33 are inlet in the frame 32 and are held in place by retaining screws 331 that are arranged on opposite sides of each magnet 33, wherein a middle retaining screw is used to hold two neighbouring magnets 33 in place. A through hole 34 for the first abutment pin 24 of the holder 2 is provided in the frame 32 in the middle of the magnets 33 from one side of the frame 32. The surface of the magnets 33 that is freely accessible from the top in the vertical direction Z defines the second coupling surface for each magnet 33.

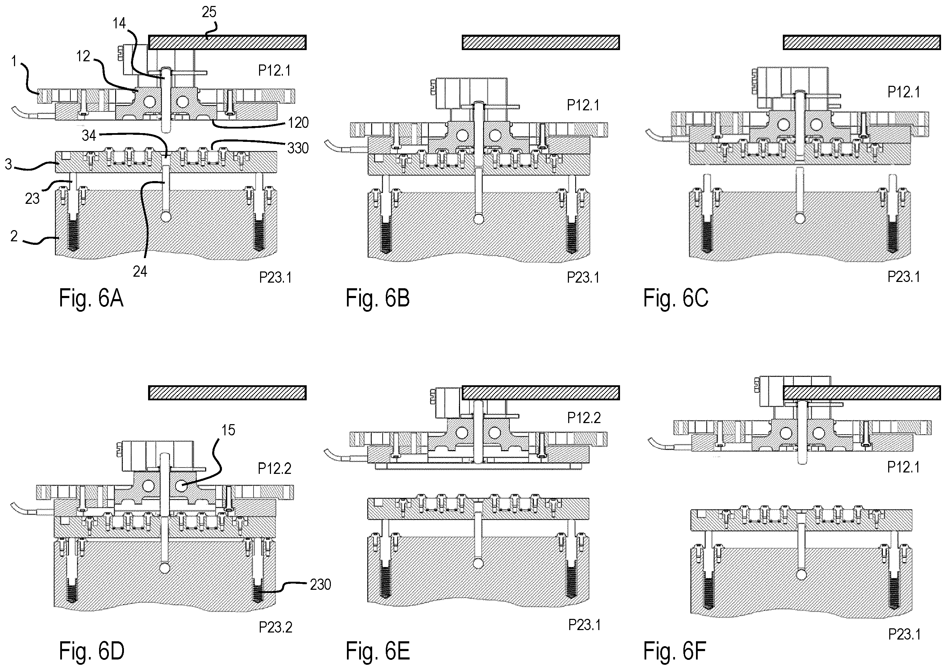

Figures 6A-F show the steps for coupling and uncoupling the attachment 3 and the head 1 of figure 1.

In figure 6A, the attachment 3 rests on the reception pins 23 of the holder 2. The reception pins 23 are in their first position P23.1, i.e., closer to the head 1, or in their upper position, respectively. The first abutment pin 24 is partially inserted into the through hole 34 of the attachment 3. The head 1 is arranged vertically above the holder 2 and the attachment 3 and below the second abutment plate 25, wherein the connector rails 14 of the head 1 are aligned with the corresponding first abutment pin 24 of the holder 2 and with the corresponding second abutment plate 25. The second abutment plate 25 is stationary with respect to the fist abutment pin 24. The connectors 12 of the head are in their first position P12.1, i.e., closer to the holder 2, or in their lower position, respectively.

In figure 6B, the head 1 is lowered down and brought into contact with the attachment 3, whilst the connectors 12 are still in their lower position P12.1 and whilst the reception pins 23 are still in their upper position P23.1. The first coupling surfaces 120 of the connectors 12 are in contact with the second coupling surfaces 330 of the magnets 33, forming a force-fit connection. The connector rails 14 are partially inserted into the through holes 34 of the attachment **3.**

In figure 6C, the head 1 is lifted of the holder 2 together with the attachment 3, whilst the connectors 12 are still in their lower position P12.1.

In figure 6D, the head 1 is lowered onto the holder 2 together with the attachment 3, forcing the connectors 12 in their upper second position P12.2 and forcing the reception pins 23 in their lower second position P23.2. When lowering the attachment 3 onto the holder 2, the first abutment pins 24 enter the corresponding through holes 34 of the attachment 3. When the attachment 3 touches the reception pins 23, the first abutment pins 24 simultaneously touch the connector rail 14 of the connectors 12. When head 1 is moved further down or closer to the holder 2, the reception pins 23 retract into the blind holes of the housing of the holder, i.e., in their lower second position P23.2 and the first abutment pins 24 push the connector rails 14 upwards and thereby push the connectors 12 upwards in their upper second position P12.2, thereby separating the first coupling surfaces 120 of the connectors from the second coupling surfaces 330 of the magnets 33. When moving the head 1 away from the holder 2, the connectors 12 stay in their upper second position P12.2 duet to the clamping effect of the detent elements 15 and the reception pins 23 return to their upper first position P23.1 due to the restoring effect of the springs 230.

In figure 6E, the head is lifted of the attachment 3, whilst the connectors 12 remain in their upper second position P12.2 and whilst the reception pins 23 have returned to their upper first position P23.1. When the head 1 is lifted further up or further away from the holder 2, the upper free end of the connector rail 14 abuts the second abutment plate 25. When the head 1 is moved further up, the second abutment plate 25 pushes the upper free end of the connector rail 14 downwards and thereby moving the connectors 12 in their lower first position P12.1, as shown in figure 6F. The head 1 is again ready to pick up an attachment 3.

Figure 7 shows a perspective view of a basic uniaxial coupling apparatus 4 according to the invention. The apparatus 4 comprises a base plate 40, a top plate 41 that is parallel to the base plate 40 and four lift rails 42 that connect the base plate 40 with the top plate 41. Two lift rails 42 are arranged on one side with respect to a first horizontal direction X and two lift rails 42 are arranged the opposite side thereof. The apparatus 4 further comprises a first lift 5 with a first platform 50 that is arranged on the lift rails 42, slidably in the vertical direction Z. One first spindle 51 is arranged between the two lift rails 42 on each side of the base plate 40 in the first horizontal direction X. The first platform 50 is mounted to the two spindles 51 by means of spindle nuts 510, allowing a movement of the platform 50 in the vertical direction Z, when the first spindles 51 are rotated. The rotation of the two first spindles 51 is synchronized by a first belt 52 and can be effected by a first drive 53. The first belt 52 and the first drive 53 are mounted on the top plate 41. The head 1 is mounted on the first platform 50 and a part of the top plate 41 that is in the projection of the vertical direction Z above the connectors 12 forms the second abutment plate 25. A shuttle 6 is arranged on the base plate 40. The shuttle 6 comprises a carrier 60 that is movable in a second horizontal direction Y by means of shuttle rails 61 a shuttle belt 62 and a shuttle drive 63. The second horizontal direction Y is perpendicular to the first horizontal direction X. The carrier 60 can be moved from a second station S60.2 next to the first platform 50 to a first station S60.1 below the first platform 50. With the carrier 60, a holder with a thereon mounted attachment can be brought from the position next to the first platform 50 to a position below the head 1. For coupling the attachment to the head 1, the head can be lowered by means of the first lift 5. A second lift 7 is provided on the base plate 40, being mounted on and moveable along the lift rails 42. The second lift 7 comprises a second split platform 70, wherein a first part of the second platform 70 is arranged on one side of the base plate 40 and wherein a second part of the second platform 70 is arranged on the opposite side of the base plate 40 with respect to the first horizontal direction X. In each split part of the second platform 70, between the guides for the lift rails 42, a through hole for the first spindle 51 is provide. The second split platforms 70 each are mounted to one second spindle 71 by means of spindle nuts 710, allowing a movement of the second platforms 70 in the vertical direction Z, when the second spindles 71 are rotated. Each second spindle 71 is arranged between one of the first spindles 51 and one of the lift rails 42. The rotation of the two second spindles 71 is synchronized by a second belt 72 and can be effected by a second drive 73. The second belt 72 and the second drive 73 are mounted on the top plate 41.

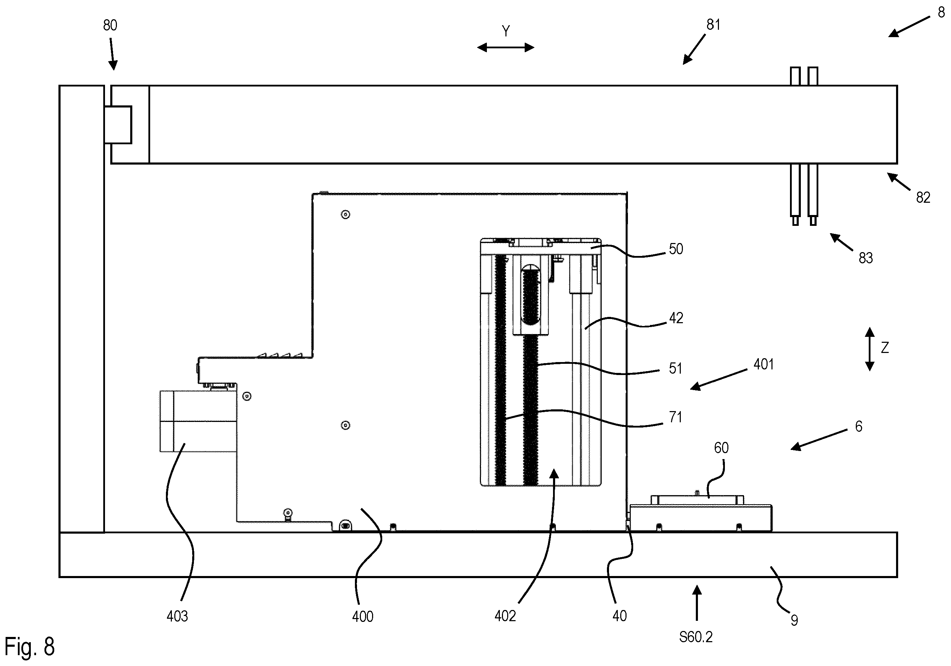

Figure 8 shows a side view of an extended uniaxial coupling apparatus 4 according to the invention. It comprises a housing 400 that encloses a part of the base plate 40, the top plate 41, the first lift 5 and the second lift 7. The Housing 400 comprises a frontal opening 401, through which the carrier 60 of the shuttle 6 can pass in the second horizontal direction Y from an outside to an inside of the housing 400. Lateral windows 402 are provided on each side of the housing 400 in the first horizontal direction X. The windows 402 are see-through allowing a visual inspection of the interior of the housing 400. At the side of the housing 400 opposite the frontal opening 401, a suction connection 403 is provided which allows the extraction of gases or vapours from inside the housing 400. The uniaxial coupling apparatus 4 is arranged on a machine base 9 together with a transfer unit 8. The transfer unit 8 comprises an X-axis 80, a Y-axis 80 and a Z-axis 82, allowing the special movement of a transfer unit head 83 in a space around the uniaxial coupling apparatus 4. For example, the transfer unit head 83 is a pipetting head which enables the transfer of liquids.

### REFERENCE SIGNS LIST

| | | | |
|---|---|---|---|
| 1 | Head | 32 | Frame |
| 10 | Plate | 33 | Magnet |
| 100 | Recess | 330 | Second coupling surface |
| 11 | Collar | | |
| 12 | Connector | 331 | Retainers |
| 120 | First coupling surface | 34 | Through hole |
| | | 4 | Apparatus |
| 121 | Elevation | 40 | Base plate |
| 13 | Connector guide | 400 | Housing |
| 14 | Connector rail | 401 | Opening |
| 15 | Detent element | 402 | Window |
| 16 | Pressure connection | 403 | Suction connection |
| 17 | Pressure sensor | 41 | Top plate |
| 2 | Holder | 42 | Lift rail |
| 20 | Housing | 5 | First lift |
| 200 | Blind hole | 50 | First platform |
| 21 | Recess | 500 | Groove |
| 22 | Side wall | 51 | First spindle |
| 23 | Pin | 510 | spindle nut |
| 230 | Spring | 52 | First belt |
| 231 | Retainers | 53 | First drive |
| 24 | First abutment | 6 | Shuttle |
| 25 | Second abutment | 60 | Carrier |
| 3 | Attachment | 61 | Shuttle rail |
| 30 | Body | 62 | Shuttle belt |
| 31 | Recess | 63 | Shuttle drive |
| 310 | Gas channel | 7 | Second lift |
| 311 | Needle | 70 | Second platform |
| 312 | Sealing | 71 | Second spindle |
| 710 | Spindle nut | P12.1 | First position of connector |
| 72 | Second belt | | |
| 73 | Second drive | P12.2 | Second position of connector |
| 8 | Transfer unit | | |
| 80 | X-axis | P23.1 | First position of reception |
| 81 | Y-axis | | |
| 82 | Z-axis | P23.2 | Second position of reception |
| 83 | Transfer unit head | | |
| 9 | Machine base | S60.1 | First station of carrier |
| X | First horizontal direction | | |
| | | S60.2 | Second station of carrier |
| Y | Second horizontal direction | | |
| Z | Vertical direction | | |

## Claims

1. A uniaxial coupling arrangement comprising a head (1) and a holder (2) that are movable relative to each other in a single direction (Z), and at least one first abutment (24) and at least one second abutment (25) that are stationary with respect to the holder (2), and an attachment (3) that is arranged between the head (1) and the holder (2),
wherein the holder (2) is aligned with the head (1) in said single direction (Z),
wherein the head (1) comprises at least one connector (12) that is displaceable in said single direction (Z) between a first position (P12.1) and a second position (P12.2), wherein with respect to the head (1), the first position (P12.1) is closer to the holder (2) than the second position (P12.2),
wherein the at least one connector (12) comprises at least one first coupling surface (120) on a side facing the holder (2),
wherein the holder (2) comprises at least one reception (23) for receiving the attachment (3) to be coupled to the head (1), said at least one reception (23) being displaceable in said single direction (Z) between a first position (P23.1) and a second position (P23.2), wherein with respect to the holder (2), the first position (P23.1) is closer to the head (1) than the second position (P23.2),
wherein the distance between the first position (P12.1) and the second position (P12.2) of the at least one connector (12) corresponds to the distance between the first position (P23.1) and the second position (P23.2) of the reception (23),
wherein the at least one connector (12) is aligned with the at least one first abutment (24) in said single direction (Z),
wherein the at least one first abutment (24) is arranged on a side of the holder (2) facing the head (1),
wherein the at least one second abutment (25) is arranged on a side of the connector (12) facing away from the holder (2), and is aligned with the at least one connector (12) in said single direction (Z),
wherein when the attachment (3) is arranged on the reception (23),
the at least one first coupling surface (120) abuts a corresponding at least one second coupling surface (330) on the attachment (3)when the head (1) is lowered down and brought into contact with the attachment (3) when the at least one connector (12) is in its first position (P12.1) and when the reception (23) is in its first position (P23.1), and
the at least one first coupling surface (120) is spaced apart from the corresponding at least one second coupling surface (330) of the attachment (3) while a connector rail (14) of the at least one connector (12) abuts the at least one first abutment (24) when the head (1) is lowered onto the holder (2) together with the attachment (3), such that the connector rail (14) is pushed upwards and thereby pushes the at least one connector (12) upwards in its second position (P12.2) when the reception (23) is in its second position (P23.2),
wherein when the head (1) is lifted away from the holder (2), the connector rail 14 abuts the second abutment plate (25) thereby moving the connector (12) in the lower first position (P12.1),
wherein one of the at least one first coupling surface (120) and the at least one second coupling surface (330) belongs to a magnetic element and the other belongs to a magnetizable element or wherein both belong to a magnetic element.

2. The uniaxial coupling arrangement according to claim 1, wherein the at least one first coupling surface (120) belongs to a magnetizable element and the at least one second coupling surface (330) belongs to a magnetic element.

3. The uniaxial coupling arrangement according to claim 1 or 2, wherein the head (1) comprises a plate (10) that extends essentially perpendicular to said single direction (Z), on which plate (10), the at least one connector (12) is displaceable mounted with the connector rail (14) extending in said single direction (Z), wherein the connector rail (14) is mounted displaceable to the plate (10) by means of at least one connector guide (13).

4. The uniaxial coupling arrangement according to one of claims 1 to 3, wherein the head (1) comprises at least one detent element (15) with which the at least one connector (12) is detachably lockable in its first position (P12.1) and its second position (P12.2).

5. The uniaxial coupling arrangement according to one of claims 1 to 4, wherein the holder (2) comprises a housing (20) with at least one blind hole (200) whose longitudinal axis is parallel to said single direction (Z) and whose opening faces the head (1), and wherein the reception comprises at least one pin (23) that is arranged in the at least one blind hole (200) and that is pushed from its second position (P23.2) towards its first position (P23.1) by a resilient element (230).

6. The uniaxial coupling arrangement according to claim 5, wherein the housing (20) comprises at least one recess (21) facing the head (1) and respective side walls (22) surrounding the at least one recess (21), and wherein the at least one blind hole (200) is arranged in one of the side walls (22).

7. A uniaxial coupling apparatus (4) comprising the uniaxial coupling arrangement according to one of claims 1 to 6, a base plate (40) with a first lift (5) for achieving the relative movement between the head (1) and the holder (2) in a vertical direction (Z), wherein the head (1) is movable with the first lift (5) or wherein the holder (2) is movable with the first lift (5), wherein the base plate (40) extends in a first horizontal direction (X) that is perpendicular to the vertical direction (Z) and in a second horizontal direction (Y) that is perpendicular to the first horizontal direction (X) and the vertical direction (Z), wherein the first lift (5) comprises a first platform (50) that is moveable with a first drive (53) and wherein the first platform (50) is guided by at least one lift rail (42) that is mounted on one lateral side of the base plate (40 in the first horizontal direction (X).

8. The uniaxial coupling apparatus (4) according to claim 7, wherein a shuttle (6) with a carrier (60) is provided on the base plate (40), wherein the carrier (60) is movable parallel to the second horizontal direction (Y), from a first station (S60.1) between the base plate (40) and the first platform (50) to a second station (S60.2) in an area outside of a projection of the first platform (50) in said single direction (Z).

9. The uniaxial coupling apparatus (4) according to claim 7 or 8, wherein the first platform (50) comprises a first part and a second part that are arranged next to each other in the second horizontal direction (Y), wherein the first part or the second part of the first platform (50) comprises a reception for the head (1).

10. The uniaxial coupling apparatus (4) according to claim 9, wherein the first part of the first platform (50) comprises a first gas connection and wherein the second part of the first platform (50) comprises a second gas connection.

11. The uniaxial coupling apparatus (4) according to one of claims 7 to 10, wherein the uniaxial coupling apparatus (4) further comprising a second lift (7), wherein the second lift (7) comprises at least one second platform (70) that is moveable with a second drive (73) and wherein the at least one second platform (70) is guided by the same at least one lift rail (42) as the first platform (50) of the first lift (5).

12. The uniaxial coupling apparatus (4) according to one of claims 7 to 11, wherein a top plate (41) is provided on a side of the at least one first lift rail (42) opposite to the base plate (40), wherein the top plate (41) is parallel to the base plate (40), wherein the at least one second abutment (25) is arranged on a side of the top plate (41) facing the base plate (40) or wherein the at least one second abutment (25) is formed integrally in a single piece with the top plate (41) on a side facing the base plate (40).

13. The uniaxial coupling apparatus (4) according to one of claims 7 to 12, further comprising a transfer unit (8) with a motor driven X-axis (80) and/or a motor driven Y-axis (81) and a motor driven Z-axis (82) that allows an alignment of a transfer unit head (83) with the second station of the shuttle (6) in said single direction (Z).

14. A method for coupling and uncoupling the attachment (3) and the head (1) of the uniaxial coupling device according to one of claims 1 to 6 or the uniaxial coupling apparatus (4) according to one of claims 7 to 13, the method comprising the steps of:
- Providing the uniaxial coupling device according to one of claims 1 to 13 with the connector (12) being in its first position (P12.1) and with the reception (23) being in its first position (P23.1);
- Placing an attachment (3) on the reception (23) of the holder (2);
- Decreasing the distance between the head (1) and the attachment (3) until the at least one first coupling surface (120) of the at least one connector (12) abuts the at least one second coupling surface (330) of the attachment (3), thereby coupling the head (1) to the attachment (3);
- Increasing the distance between the head (1) and the holder (2), thereby separating the attachment (3) from the holder (2);
- Decreasing the distance between the head (1) and the holder (2) until the at least one first coupling surface (120) of the at least one connector (12) abuts the at least one second coupling surface (330) of the attachment (3), while the at least one connector (12) is in its second position (P12.2) and while the reception (23) is in its second position (P23.2), thereby separating the head (1) from attachment (3);
- Increasing the distance between the head (1) and the holder (2), whereby the reception (23) returns to its first position (P23.1); and
- Increasing the distance between the head (1) and the holder (2) further, until the at least one connector (12) abuts the at least one second abutment (25) and further, until the at least one connector (12) is pushed in its first position (12.1).

## Patentansprüche

1. Eine einachsige Kupplungsanordnung, umfassend einen Kopf (1) und einen Halter (2), die relativ zueinander in einer einzigen Richtung (Z) beweglich sind, und mindestens einen ersten Anschlag (24) und mindestens einen zweiten Anschlag (25), die in Bezug auf den Halter (2) stationär sind, und eine Befestigung (3), die zwischen dem Kopf (1) und dem Halter (2) angeordnet ist,
wobei der Halter (2) mit dem Kopf (1) in der einzigen Richtung (Z) ausgerichtet ist,
wobei der Kopf (1) mindestens einen Verbinder (12) umfasst, der in der einzigen Richtung (Z) zwischen einer ersten Position (P12.1) und einer zweiten Position (P12.2) verschiebbar ist, wobei in Bezug auf den Kopf (1) die erste Position (P12.1) näher an dem Halter (2) ist als die zweite Position (P12.2),
wobei der mindestens eine Verbinder (12) mindestens eine erste Kupplungsfläche (120) auf einer dem Halter (2) zugewandten Seite umfasst,
wobei der Halter (2) mindestens eine Aufnahme (23) zum Aufnehmen der mit dem Kopf (1) zu koppelnden Befestigung (3) umfasst, wobei die mindestens eine Aufnahme (23) in der einzigen Richtung (Z) zwischen einer ersten Position (P23.1) und einer zweiten Position (P23.2) verschiebbar ist, wobei in Bezug auf den Halter (2) die erste Position (P23.1) näher an dem Kopf (1) ist als die zweite Position (P23.2),
wobei der Abstand zwischen der ersten Position (P12.1) und der zweiten Position (P12.2) des mindestens einen Verbinders (12) dem Abstand zwischen der ersten Position (P23.1) und der zweiten Position (P23.2) der Aufnahme (23) entspricht,
wobei der mindestens eine Verbinder (12) mit dem mindestens einen ersten Anschlag (24) in der einzigen Richtung (Z) ausgerichtet ist,
wobei der mindestens eine erste Anschlag (24) auf einer dem Kopf (1) zugewandten Seite des Halters (2) angeordnet ist,
wobei der mindestens eine zweite Anschlag (25) auf einer dem Halter (2) abgewandten Seite des Verbinders (12) angeordnet ist und mit dem mindestens einen Verbinder (12) in der einzigen Richtung (Z) ausgerichtet ist,
wobei, wenn die Befestigung (3) auf der Aufnahme (23) angeordnet ist,
die mindestens eine erste Kupplungsfläche (120) an einer entsprechenden mindestens einen zweiten Kupplungsfläche (330) auf der Befestigung (3) anliegt, wenn der Kopf (1) nach unten abgesenkt und in Kontakt mit der Befestigung (3) gebracht wird, wenn sich der mindestens eine Verbinder (12) in seiner ersten Position (P12.1) befindet und wenn sich die Aufnahme (23) in ihrer ersten Position (P23.1) befindet, und
die mindestens eine erste Kupplungsfläche (120) von der entsprechenden mindestens einen zweiten Kupplungsfläche (330) der Befestigung (3) beabstandet ist, während eine Verbinderschiene (14) des mindestens einen Verbinders (12) an dem mindestens einen ersten Anschlag (24) anliegt, wenn der Kopf (1) zusammen mit der Befestigung (3) auf den Halter (2) abgesenkt wird, so dass die Verbinderschiene (14) nach oben gedrückt wird und dadurch den mindestens einen Verbinder (12) in seiner zweiten Position (P12.2) nach oben drückt, wenn sich die Aufnahme (23) in ihrer zweiten Position (P23.2) befindet,
wobei, wenn der Kopf (1) von dem Halter (2) abgehoben wird, die Verbinderschiene 14 an der zweiten Anschlagplatte (25) anliegt, wodurch der Verbinder (12) in die untere erste Position (P12.1) bewegt wird,
wobei eine der mindestens einen ersten Kupplungsfläche (120) und der mindestens einen zweiten Kupplungsfläche (330) zu einem magnetischen Element gehört und die andere zu einem magnetisierbaren Element gehört oder wobei beide zu einem magnetischen Element gehören.

2. Die einachsige Kupplungsanordnung gemäss Anspruch 1, wobei die mindestens eine erste Kupplungsfläche (120) zu einem magnetisierbaren Element gehört und die mindestens eine zweite Kupplungsfläche (330) zu einem magnetischen Element gehört.

3. Die einachsige Kupplungsanordnung gemäss Anspruch 1 oder 2, wobei der Kopf (1) eine Platte (10) umfasst, die sich im Wesentlichen senkrecht zu der einzigen Richtung (Z) erstreckt, wobei auf der Platte (10) der mindestens eine Verbinder (12) verschiebbar montiert ist, wobei sich die Verbinderschiene (14) in der einzigen Richtung (Z) erstreckt, wobei die Verbinderschiene (14) mittels mindestens einer Verbinderführung (13) verschiebbar an der Platte (10) montiert ist.

4. Die einachsige Kupplungsanordnung gemäss einem der Ansprüche 1 bis 3, wobei der Kopf (1) mindestens ein Rastelement (15) umfasst, mit dem der mindestens eine Verbinder (12) in seiner ersten Position (P12.1) und seiner zweiten Position (P12.2) lösbar verriegelbar ist.

5. Die einachsige Kupplungsanordnung gemäss einem der Ansprüche 1 bis 4, wobei der Halter (2) ein Gehäuse (20) mit mindestens einem Sackloch (200) umfasst, dessen Längsachse parallel zu der einzigen Richtung (Z) ist und dessen Öffnung dem Kopf (1) zugewandt ist, und wobei die Aufnahme mindestens einen Stift (23) umfasst, der in dem mindestens einen Sackloch (200) angeordnet ist und der durch ein elastisches Element (230) von seiner zweiten Position (P23.2) in Richtung seiner ersten Position (P23.1) gedrückt wird.

6. Die einachsige Kupplungsanordnung gemäss Anspruch 5, wobei das Gehäuse (20) mindestens eine dem Kopf (1) zugewandte Ausnehmung (21) und jeweilige Seitenwände (22), die die mindestens eine Ausnehmung (21) umgeben, umfasst, und wobei das mindestens eine Sackloch (200) in einer der Seitenwände (22) angeordnet ist.

7. Eine einachsige Kupplungsvorrichtung (4), umfassend die einachsige Kupplungsanordnung gemäss einem der Ansprüche 1 bis 6, eine Grundplatte (40) mit einem ersten Lift (5) zum Erreichen der relativen Bewegung zwischen dem Kopf (1) und dem Halter (2) in einer vertikalen Richtung (Z), wobei der Kopf (1) mit dem ersten Lift (5) beweglich ist oder wobei der Halter (2) mit dem ersten Lift (5) beweglich ist, wobei sich die Grundplatte (40) in einer ersten horizontalen Richtung (X), die senkrecht zu der vertikalen Richtung (Z) ist, und in einer zweiten horizontalen Richtung (Y), die senkrecht zu der ersten horizontalen Richtung (X) und der vertikalen Richtung (Z) ist, erstreckt, wobei der erste Lift (5) eine erste Plattform (50) umfasst, die mit einem ersten Antrieb (53) beweglich ist, und wobei die erste Plattform (50) durch mindestens eine Liftschiene (42) geführt wird, die auf einer lateralen Seite der Grundplatte (40) in der ersten horizontalen Richtung (X) montiert ist.

8. Die einachsige Kupplungsvorrichtung (4) gemäss Anspruch 7, wobei ein Shuttle (6) mit einem Träger (60) auf der Grundplatte (40) vorgesehen ist, wobei der Träger (60) parallel zu der zweiten horizontalen Richtung (Y) von einer ersten Station (S60.1) zwischen der Grundplatte (40) und der ersten Plattform (50) zu einer zweiten Station (S60.2) in einem Bereich außerhalb einer Projektion der ersten Plattform (50) in der einzigen Richtung (Z) beweglich ist.

9. Die einachsige Kupplungsvorrichtung (4) gemäss Anspruch 7 oder 8, wobei die erste Plattform (50) einen ersten Teil und einen zweiten Teil umfasst, die nebeneinander in der zweiten horizontalen Richtung (Y) angeordnet sind, wobei der erste Teil oder der zweite Teil der ersten Plattform (50) eine Aufnahme für den Kopf (1) umfasst.

10. Die einachsige Kupplungsvorrichtung (4) gemäss Anspruch 9, wobei der erste Teil der ersten Plattform (50) eine erste Gasverbindung umfasst und wobei der zweite Teil der ersten Plattform (50) eine zweite Gasverbindung umfasst.

11. Die einachsige Kupplungsvorrichtung (4) gemäss einem der Ansprüche 7 bis 10, wobei die einachsige Kupplungsvorrichtung (4) ferner einen zweiten Lift (7) umfasst, wobei der zweite Lift (7) mindestens eine zweite Plattform (70) umfasst, die mit einem zweiten Antrieb (73) beweglich ist, und wobei die mindestens eine zweite Plattform (70) durch dieselbe mindestens eine Liftschiene (42) wie die erste Plattform (50) des ersten Lifts (5) geführt wird.

12. Die einachsige Kupplungsvorrichtung (4) gemäss einem der Ansprüche 7 bis 11, wobei eine Deckplatte (41) auf einer der Grundplatte (40) gegenüberliegenden Seite der mindestens einen ersten Liftschiene (42) vorgesehen ist, wobei die Deckplatte (41) parallel zu der Grundplatte (40) ist, wobei der mindestens eine zweite Anschlag (25) auf einer der Grundplatte (40) zugewandten Seite der Deckplatte (41) angeordnet ist oder wobei der mindestens eine zweite Anschlag (25) einstückig mit der Deckplatte (41) auf einer der Grundplatte (40) zugewandten Seite ausgebildet ist.

13. Die einachsige Kupplungsvorrichtung (4) gemäss einem der Ansprüche 7 bis 12, ferner umfassend eine Transfereinheit (8) mit einer motorgetriebenen X-Achse (80) und/oder einer motorgetriebenen Y-Achse (81) und einer motorgetriebenen Z-Achse (82), die eine Ausrichtung eines Transfereinheitskopfes (83) mit der zweiten Station des Shuttles (6) in der einzigen Richtung (Z) ermöglicht.

14. Ein Verfahren zum Kuppeln und Entkuppeln des Aufsatzes (3) und des Kopfes (1) der einachsigen Kupplungsvorrichtung gemäss einem der Ansprüche 1 bis 6 oder der einachsigen Kupplungsvorrichtung (4) gemäss einem der Ansprüche 7 bis 13, wobei das Verfahren die folgenden Schritte umfasst:
- Bereitstellen der einachsigen Kupplungsvorrichtung gemäss einem der Ansprüche 1 bis 13 mit dem Verbinder (12) in seiner ersten Position (P12.1) und mit der Aufnahme (23) in ihrer ersten Position (P23.1);
- Platzieren einer Befestigung (3) auf der Aufnahme (23) des Halters (2);
- Verringern des Abstands zwischen dem Kopf (1) und der Befestigung (3), bis die mindestens eine erste Kupplungsfläche (120) des mindestens einen Verbinders (12) an der mindestens einen zweiten Kupplungsfläche (330) der Befestigung (3) anliegt, wodurch der Kopf (1) mit der Befestigung (3) gekoppelt wird;
- Erhöhen des Abstands zwischen dem Kopf (1) und dem Halter (2), wodurch die Befestigung (3) vom Halter (2) getrennt wird;
- Verringern des Abstands zwischen dem Kopf (1) und dem Halter (2), bis die mindestens eine erste Kupplungsfläche (120) des mindestens einen Verbinders (12) an der mindestens einen zweiten Kupplungsfläche (330) der Befestigung (3) anliegt, während sich der mindestens eine Verbinder (12) in seiner zweiten Position (P12.2) befindet und während sich die Aufnahme (23) in ihrer zweiten Position (P23.2) befindet, wodurch der Kopf (1) von der Befestigung (3) getrennt wird;
- Erhöhen des Abstands zwischen dem Kopf (1) und dem Halter (2), wodurch die Aufnahme (23) in ihre erste Position (P23.1) zurückkehrt; und
- weiteres Erhöhen des Abstands zwischen dem Kopf (1) und dem Halter (2), bis der mindestens eine Verbinder (12) an dem mindestens einen zweiten Anschlag (25) anliegt, und weiter, bis der mindestens eine Verbinder (12) in seine erste Position (12.1) gedrückt wird.

## Revendications

1. Structure d'accouplement uniaxial, comprenant une tête (1) et un support (2) qui sont mobiles l'un par rapport à l'autre dans une direction unique (Z), et au moins une première butée (24) et au moins une deuxième butée (25) qui sont fixes par rapport au support (2), et un accessoire (3) qui est disposé entre la tête (1) et le support (2),
dans laquelle le support (2) est aligné avec la tête (1) dans ladite direction unique (Z),
dans laquelle la tête (1) comprend au moins un connecteur (12) qui peut être déplacé dans ladite direction unique (Z) entre une première position (P12.1) et une seconde position (P12.2), la première position (P12.1) étant, par rapport à la tête (1), plus proche du support (2) que la seconde position (P12.2),
dans laquelle le connecteur (12), au moins au nombre de un, comprend au moins une première surface d'accouplement (120) sur un côté faisant face au support (2),
dans laquelle le support (2) comprend au moins un élément de réception (23) destiné à recevoir l'accessoire (3) à coupler à la tête (1), ledit élément de réception (23), au moins au nombre de un, pouvant être déplacé dans ladite direction unique (Z) entre une première position (P23.1) et une seconde position (P23.2), la première position (P23.1) étant, par rapport au support (2), plus proche de la tête (1) que la seconde position (P23.2), la distance entre la première position (P12.1) et la seconde position (P12.2) du connecteur (12), au moins au nombre de un, correspondant à la distance entre la première position (P23.1) et la seconde position (P23.2) de l'élément de réception ( 2 3),
dans laquelle le connecteur (12), au moins au nombre de un, est aligné avec la première butée (24), au moins au nombre de une, dans ladite direction unique (z),
dans laquelle la première butée (24), au moins au nombre de une, est disposée sur un côté du support (2) faisant face à la tête (1),
dans laquelle ladite seconde butée (25), au moins au nombre de une, est disposée sur un côté du connecteur (12) opposé au support (2) et est alignée avec le connecteur (12), au moins au nombre de un, dans ladite direction unique (Z),
dans laquelle, lorsque l'accessoire (3) est disposé sur l'élément de réception (23),
la première surface d'accouplement (120), au moins au nombre de une, vient en butée contre une deuxième surface d'accouplement (330) correspondante, au moins au nombre de une, sur l'accessoire (3) lorsque la tête (1) est abaissée et est amenée en contact avec l'accessoire (3) lorsque le connecteur (12), au moins au nombre de un, se trouve dans sa première position (P12.1) et lorsque l'élément de réception (23) se trouve dans sa première position (P23.1), et
la première surface d'accouplement (120), au moins au nombre de une, est espacée de la deuxième surface d'accouplement (330) correspondante, au moins au nombre de une, de l'accessoire (3) lorsqu'un rail de connecteur (14) du connecteur (12), au moins au nombre de un, vient en butée contre la première butée (24), au moins au nombre de une, lorsque la tête (1) est abaissée sur le support (2) avec l'accessoire (3) de façon telle que le rail de connecteur (14) est poussé vers le haut et pousse par conséquent le connecteur (12), au moins au nombre de un, vers le haut dans sa seconde position (P12.2) lorsque l'élément de réception (23) se trouve dans sa seconde position (P23.2),
dans laquelle, lorsque la tête (1) est relevée pour s'éloigner du support (2), le rail de connecteur (14) vient en butée contre la deuxième plaque de butée (25), déplaçant ainsi le connecteur (12) dans la première position inférieure (P12.1),
dans laquelle une parmi la première surface d'accouplement (120), au moins au nombre de une, et la deuxième surface d'accouplement (330), au moins au nombre de une, appartient à un élément magnétique et l'autre appartient à un élément magnétisable, ou dans laquelle les deux appartiennent à un élément magnétique.

2. Structure d'accouplement uniaxial selon la revendication 1, dans laquelle la première surface d'accouplement (120), au moins au nombre de une, appartient à un élément magnétisable et la deuxième surface d'accouplement (330), au moins au nombre de une, appartient à un élément magnétique.

3. Structure d'accouplement uniaxial selon la revendication 1 ou 2, dans laquelle la tête (1) comprend une plaque (10) qui s'étend essentiellement perpendiculairement à ladite direction unique (Z), plaque (10) sur laquelle le connecteur (12), au moins au nombre de un, est monté de façon à pouvoir être déplacé, via le rail de connecteur (14) s'étendant dans ladite direction unique (Z), le rail de connecteur (14) étant monté sur la plaque (10) de façon à pouvoir être déplacé, au moyen d'au moins un guide de connecteur (13).

4. Structure d'accouplement uniaxial selon l'une des revendications 1 à 3, dans laquelle la tête (1) comprend au moins un élément de verrouillage (15) avec lequel le connecteur (12), au moins au nombre de un, peut être verrouillé de façon réversible dans sa première position (P12.1) et dans sa seconde position (P12.2).

5. Structure d'accouplement uniaxial selon l'une des revendications 1 à 4, dans laquelle le support (2) comprend un logement (20)
comportant au moins un trou borgne (200) dont l'axe longitudinal est parallèle à ladite direction unique (Z) et dont l'ouverture fait face à la tête (1), et dans laquelle l'élément de réception comprend au moins une goupille (23) qui est disposée dans le trou borgne (200), au moins au nombre de un, et qui est poussée de sa seconde position (P23.2) vers sa première position (P23.1) par un élément élastique (230).

6. Structure d'accouplement uniaxial selon la revendication 5, dans laquelle le logement (20) comprend au moins un évidement (21)
qui fait face à la tête (1) et des parois latérales respectives (22) entourant l'évidement (21), au moins au nombre de un, et dans laquelle le trou borgne (200), au moins au nombre de un, est disposé dans l'une des parois latérales (22).

7. Appareil d'accouplement uniaxial (4) comprenant la structure d'accouplement uniaxial selon l'une des revendications 1 à 6, une plaque de base (40) avec un premier dispositif de levage (5) permettant de réaliser le déplacement relatif entre la tête (1) et le support (2) dans une direction verticale (Z), dans lequel la tête (1) est mobile avec le premier dispositif de levage (5) ou dans lequel le support (2) est mobile avec le premier dispositif de levage (5), dans lequel la plaque de base (40) s'étend dans une première direction horizontale (X) qui est perpendiculaire à la direction verticale (Z) et dans une deuxième direction horizontale (Y) qui est perpendiculaire à la première direction horizontale (X) et à la direction verticale (Z), dans lequel le premier dispositif de levage (5) comprend une première plate-forme (50) qui peut être déplacée avec un premier entraînement (53) et dans lequel la première plate-forme (50) est guidée par au moins un rail de levage (42) qui est monté sur un côté latéral de la plaque de base (40) dans la première direction horizontale (X).

8. Appareil d'accouplement uniaxial (4) selon la revendication 7, dans lequel une navette (6) avec un chariot (60) est prévue sur la plaque de base (40), dans lequel le chariot (60) peut être déplacé parallèlement à la deuxième direction horizontale (Y) depuis une première station (S60.1) entre la plaque de base (40) et la première plate-forme (50) vers une deuxième station (S60.2) dans une zone située à l'extérieur d'une projection de la première plate-forme (50) dans ladite direction unique (Z).

9. Appareil d'accouplement uniaxial (4) selon la revendication 7 ou 8, dans lequel la première plate-forme (50) comprend une première partie et une deuxième partie qui sont disposées l'une à côté de l'autre dans la deuxième direction horizontale (Y), dans lequel la première partie ou la deuxième partie de la première plate-forme (50) comprend un élément de réception pour la tête (1).

10. Appareil d'accouplement uniaxial (4) selon la revendication 9, dans lequel la première partie de la première plate-forme (50) comprend un premier raccordement pour gaz et dans lequel la deuxième partie de la première plate-forme (50) comprend un deuxième raccordement pour gaz.

11. Appareil d'accouplement uniaxial (4) selon l'une des revendications 7 à 10, dans lequel l'appareil d'accouplement uniaxial (4) comprend en outre un deuxième dispositif de levage (7), dans lequel le deuxième dispositif de levage (7) comprend au moins une deuxième plate-forme (70) qui peut être déplacée par un deuxième entraînement (73), et dans lequel la deuxième plate-forme (70), au moins au nombre de une, est guidée par le même rail de levage (42), au moins au nombre de un, que la première plate-forme (50) du premier dispositif de levage (5).

12. Appareil d'accouplement uniaxial (4) selon l'une des revendications 7 à 11, dans lequel une plaque supérieure (41) est prévue sur un côté du premier rail de levage (42), au moins au nombre de un, opposé à la plaque de base (40), dans lequel la plaque supérieure (41) est parallèle à la plaque de base (40), dans lequel la deuxième butée (25), au moins au nombre de une, est disposée sur un côté de la plaque supérieure (41) faisant face à la plaque de base (40) ou dans lequel la deuxième butée (25), au moins au nombre de une, est formée d'un seul tenant avec la plaque supérieure (41) sur un côté faisant face à la plaque de base (40).

13. Appareil d'accouplement uniaxial (4) selon l'une des revendications 7 à 12, comprenant en outre une unité de transfert (8), qui comprend un axe X entraîné par moteur (80) et/ou un axe Y entraîné par moteur (81) et un axe Z entraîné par moteur (82), qui permet un alignement d'une tête d'unité de transfert (83) avec la deuxième station de la navette (6) dans ladite direction unique (Z).

14. Procédé d'accouplement et de désaccouplement de l'accessoire (3) et de la tête (1) de la structure d'accouplement uniaxial selon l'une des
revendications 1 à 6 ou de l'appareil d'accouplement uniaxial (4) selon l'une des revendications 7 à 13, le procédé comprenant les étapes consistant à :
- fournir la structure d'accouplement uniaxial selon l'une des revendications 1 à 13, le connecteur (12) se trouvant dans sa première position (P12.1) et l'élément de réception (23) se trouvant dans sa première position (P23.1) ;
- placer un accessoire (3) sur l'élément de réception (23) du support (2) ;
- réduire la distance entre la tête (1) et l'accessoire (3) jusqu'à ce que la première surface d'accouplement (120), au moins au nombre de une, du connecteur (12), au moins au nombre de un, vienne en butée contre la deuxième surface d'accouplement (330), au moins au nombre de une, de l'accessoire (3), accouplant ainsi la tête (1) à l'accessoire (3) ;
- augmenter la distance entre la tête (1) et le support (2), séparant ainsi l'accessoire (3) du support (2) ;
- réduire la distance entre la tête (1) et le support (2) jusqu'à ce que la première surface d'accouplement (120), au moins au nombre de une, du connecteur (12), au moins au nombre de un, vienne en butée contre la deuxième surface d'accouplement (330), au moins au nombre de une, de l'accessoire (3), tandis que le connecteur (12), au moins au nombre de un, se trouve dans sa seconde position (P12.2) et que l'élément de réception (23) se trouve dans sa seconde position (P23.2), séparant ainsi la tête (1) de l'accessoire (3) ;
- augmenter la distance entre la tête (1) et le support (2), l'élément de réception (23) revenant alors à sa première position (P23.1) ; et
- augmenter davantage la distance entre la tête (1) et le support (2), jusqu'à ce que le connecteur (12), au moins au nombre de un, vienne en butée contre la deuxième butée (25), au moins au nombre de une, et davantage jusqu'à ce que le connecteur (12), au moins au nombre de un, soit poussé dans sa première position (12.1).
